Europäisches Patentamt

European Patent Office

Office européen des brevets

(11) Publication number: **0 136 267**
**B1**

# EUROPEAN PATENT SPECIFICATION

(45) Date of publication of patent specification: **30.09.87**

(21) Application number: **84830182.6**

(22) Date of filing: **19.06.84**

(51) Int. Cl.⁴: **B 60 K 41/08,** F 02 N 17/00,
B 60 R 25/06

(54) **System for controlling the operation of the propelling apparatus in a motor vehicle.**

(30) Priority: **21.06.83 IT 6769083**
**23.03.84 IT 6728284**

(43) Date of publication of application:
**03.04.85 Bulletin 85/14**

(45) Publication of the grant of the patent:
**30.09.87 Bulletin 87/40**

(84) Designated Contracting States:
**AT DE FR GB**

(56) References cited:
**DE-A-2 351 121**
**DE-A-2 615 029**
**DE-A-3 212 843**
**DE-A-3 343 018**
**DE-B-1 755 528**
**FR-A-1 289 186**
**FR-A-2 347 227**
**FR-A-2 390 305**
**FR-A-2 424 415**
**FR-A-2 435 794**
**FR-A-2 469 313**
**GB-A-1 459 419**

(73) Proprietor: **FIAT AUTO S.p.A.**
**Corso Giovanni Agnelli 200**
**I-10135 Torino (IT)**

(72) Inventor: **Lupo, Giorgio**
**Via Domodossola 10**
**I-10040 Rivalta (Torino) (IT)**
Inventor: **Troisi, Roberto**
**Corso Racconigi 180/7**
**I-10141 Torino (IT)**

(74) Representative: **Quinterno, Giuseppe et al**
**c/o Jacobacci-Casetta & Perani S.p.A.**
**Via Alfieri, 17**
**I-10121 Torino (IT)**

(56) References cited:
**GB-A-2 044 893**
**GB-A-2 058 963**
**US-A-2 546 565**
**US-A-2 673 527**
**US-A-3 703 228**
**US-A-4 200 080**
**US-A-4 215 596**

**AUTOMATION, February 1966, pages 102-103,**
**Cleveland, Ohio, USA; R.D. MacDonald:**
**"Miniature hydraulic power units"**

Courier Press, Leamington Spa, England.

## Description

The present invention relates to a system for controlling the operation of the power train of a motor vehicle as defined in the introduction of appended Claim 1.

A system of the above kind is disclosed for example in FR—A—2 469 313.

The object of the present invention is to provide a system of that kind which in addition to its normal functions is also adapted to fulfil an effective antitheft function.

This object is achieved according to the invention with the system characterised in the appended Claim 1.

Further characteristics and advantages of the control system according to the invention will become apparent from the detailed description which follows with reference to the appended drawings, provided purely by way of non-limiting example, in which:

Figure 1 is a partial block schematic diagram of a control system according to the invention;

Figure 2 is an axial sectional view of a preferred embodiment of a gear lever usable in the control system according to the invention;

Figure 3 is a section similar to that of Figure 2 with the gear lever in a different operative condition or position;

Figure 4 is the hydraulic diagram of an electrohydraulic control unit forming part of the system according to the invention;

Figure 5 is a perspective view of one embodiment of the electro-hydraulic unit of Figure 4;

Figure 6 is an axial section of the hydraulic unit taken on the line VI—VI of Figure 5;

Figure 7 is a section taken on the line VII—VII of Figure 6, and

Figures 8 and 9 are sections partially in elevation, taken on the lines VIII—VIII and IX—IX of Figure 7, respectively.

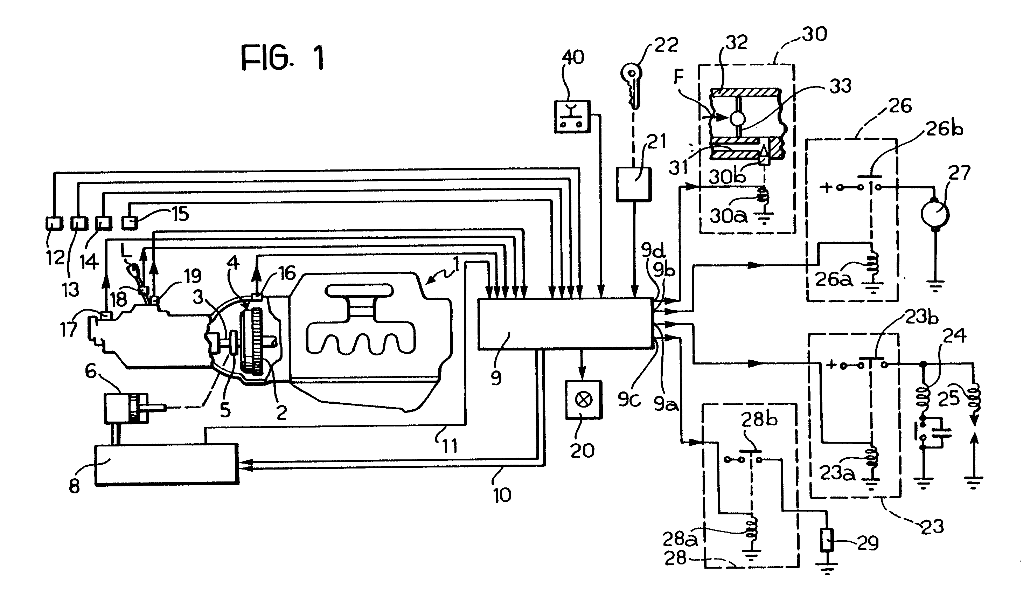

In Figure 1, a conventional type of internal combustion engine for motor vehicles is generally indicated 1. The engine includes a flywheel 2 which may be coupled to the main shaft 3 of a gear-box by a friction clutch of conventional type, generally indicated 4. The clutch includes, in particular, a pressure plate member 5 the position of which is controlled by an actuator 6 of pneumatic or hydraulic type or their equivalent. The kinematic coupling between the actuator 6 and the pressure plate sleeve 5 of the friction clutch may be of the direct type or may be effected through linkages or by a cable transmission such as a Bowden cable, etc.

The body of the cylinder 6 is connected through a pipeline 7 to an electro-hydraulic control system, generally indicated 8, which will be described in greater detail below. This system, when actuated, supplies pressurised fluid to the cylinder 6 so as to cause its piston to move and consequently disengage (open) the friction clutch 4.

An electronic control and operating unit, generally indicated 9, is connected to the pilot system 8 through connecting lines 10, 11. The connecting lines 10 allow the electronic unit 9 to send commands to the pilot system, while the line 11 allows the electronic unit 9 to receive information from any sensors incorporated in the pilot system.

In the embodiment shown in Figure 1, the electronic control and operating unit 9 is further connected to:

a tachometric sensor 12 for providing electrical signals indicative of the speed of the vehicle;

a sensor 13 for providing electrical signals indicative of the angle of opening of the throttle valve; this sensor may be constituted by a sensor associated with the accelerator pedal or a position sensor effectively associated with the throttle valve of the carburettor;

a position sensor 14 associated with the control member of the starter device;

a further position sensor 15 associated with the brake pedal;

a sensor 16 for the rate of rotation of the engine;

a sensor 17 for the rate of rotation of the input shaft of the gearbox;

a position sensor 18 associated with the gear lever L for providing a signal when this lever is operated;

a further position sensor 19 associated with the lever L for providing a signal when this is in the "neutral" position, and

a position sensor 21 associated with the ignition and starter switch (not illustrated) for providing a signal when the operating key 22 for this switch is moved to a predetermined position.

The control and operating unit 9 is further connected to a visual display unit 20 for providing optical signals relating to the operating conditions and/or malfunction of the system.

The control and operating unit 9 also has a first output 9a connected to the control input of a controlled switch device 23. In the embodiment illustrated, this switch device is constituted by a relay having an excitation winding 23a which controls a movable contact member 23b located in the connection between the voltage source (battery) of the vehicle and the primary winding of the ignition coil. The secondary winding of this coil is indicated 25.

The movable contact 23b is normally closed but can move into the open position as a result of the energisation of the coil 23a, thus interrupting the ignition circuit of the engine.

The unit 9 has another output 9b connected to the control input of a second controlled switch device 26 also constituted, for example, by a relay including a coil 26a which controls a movable contact 26b. The latter is located in the connection between the electric starter motor 27 and the battery.

A further output 9c of the control and operating unit 9 is connected to the input of another controlled switch device 28 which may also be constituted, for example, by a relay with an excitation coil 28a and a movable contact member 28b controlled thereby and connected between the voltage source (battery) and the auxiliary electrical apparatus of the motor vehicle generally indicated 29. The term "auxiliary electrical apparatus" refers to all the onboard electrical apparatus whose operation is not essential for the movement of the motor vehicle. This apparatus may be constituted, for example, by the resistances for the defrosting or demisting of the rear window of the motor vehicle, the electric cigar lighter, etc.

A further output 9d of the control and operating unit 9 is connected to the control input of an electromagnetically-operated cut-off device 30 including a winding 30a and a movable core 30b. This core, which acts as an obturator, is movable between a working position in which it shuts off the idling jet 31 of the carburettor or mixer 32 (only partly illustrated in the drawing) of the engine, and a rest position in which it does not shut off this jet. In the drawing, the throttle valve is indicated 33 and the direction of flow of the air-fuel mixture is indicated F. The control and operating unit 9 is also connected to a manually-controlled operating device 40. This device, which is preferably a monostable switch ("toggle switch"), is intended to be located in a position which is readily accessible to the driver and allows the entire control apparatus described above to be switched on or switched off.

The electronic control and operating unit 9 is arranged by conventional programming techniques to automatically disengage the friction clutch 4, by means of the pilot system 8 and the actuator 6, when the position sensor 18 indicates that the gear lever has been grasped and operated and predetermined conditions detected by the other sensors connected to the central unit are satisfied at the same time.

The electronic control and operating unit 9 is also arranged to automatically engage the friction clutch 4, again by means of the pilot system 8 and actuator 6, when the gear lever (L) is released and predetermined conditions detected by the other sensors occur at the same time.

The electronic control and operating unit 9 is also arranged, in known manner, to energise the controlled switch device 23 to cause the stoppage of the engine of the motor vehicle when the following conditions occur simultaneously:

the engine is running (information provided by the sensor 16);

the friction clutch 4 is engaged (information provided by the sensor 18);

the gearbox is in neutral (information provided by the sensor 19), and

the speed of the vehicle is less than a predetermined value (information provided by the sensor 12).

If these conditions occur simultaneously, the control and operating unit 9 causes the energisation of the winding 23a and the consequent interruption of the ignition circuit of the engine. The latter stops.

This condition may possibly be indicated to the user by the visual display apparatus 20.

After an automatic stoppage, the electronic control and operating unit 9 causes the energisation of the controlled switch 26 and the restarting of the engine 1 by means of the electric starter motor 27 when the gear lever L is operated, this condition being indicated by the sensor 18. Immediately this occurs, the control and operating unit 9 de-energises the relay 23 to reconnect the electric ignition circuit, and energises the relay 26 to cause the activation of the electric motor 27 for starting the internal combustion engine 1.

The relay 28 is energised when the relay 23 is energised and de-energised when the relay 26 is energised. The order in which the relays 28 and 23 are energised is substantially immaterial. Thus, when the control and operating unit 9 causes the stoppage of the engine 1, the supply to the auxiliary electrical apparatus 29 of the motor vehicle, which may have been energised previously, is cut off.

The relay 28 is conveniently of the type with delayed de-energisation, in order to prevent the auxiliary electrical apparatus 29 which had been energised previously from overloading the battery of the motor vehicle on restarting of the engine 1.

During travel of the motor vehicle, each time the rate of rotation of the engine surpasses a predetermined value (for example 1500 r.p.m.), the control and operating unit 9 is arranged to energise the cut-off device 30. This activation occurs when the position sensor 13 indicates to the unit 9 that the accelerator pedal has been released.

In this situation, the throttle valve 23 is in the closed position and the obturator 30b shuts off the idling jet 31 completely. Thus, the engine is no longer supplied.

The unit 9 is also arranged to de-energise the cut-off device 30 immediately the rate of rotation of the engine falls below a predetermined value (for example 1000 r.p.m.). Under these conditions, the fuel is re-supplied to the engine through the idling duct 31: the engine may thus be re-started quickly.

Conveniently, the electronic control and operating unit 9 is also arranged to energise the cut-off device 30 each time the controlled switch device 23 is energised to cause the interruption of the electric ignition circuit. The interruption of this circuit and the simultaneous energisation of the cut-off device 30 ensures very rapid and safe stoppage of the engine.

Naturally, the activation and de-activation of the actuator devices connected to the outputs of the control and operating unit 9 may be conditioned to occur under other circumstances as well as the conditions already listed above. Thus, for example, the automatic stoppage of the engine may be conditioned to the fact that the charge level of the battery of the motor vehicle is greater than a predetermined minimum value sufficient to allow the subsequent automatic re-ignition of the engine.

As will now be described, the control system according to the invention, in addition to the functions described above, is also adapted to fulfil an effective anti-theft function. For this purpose, the electronic control and operating unit 9 may be arranged to cause a permanent cut-off of fuel and a permanent breakage of the electrical ignition circuit when a code has been supplied to it which differs from a predetermined coded combination. Conveniently, this code may be supplied to the electronic control and operating unit 9 through the same gear lever L. In an embodiment tested by the Applicants, the user, after having inserted the key 22 into the ignition switch and before activation of the unit 9 by the switch 40, operates the gear lever L for a predetermined number of times. The unit 9, through the sensor 18, detects the number of these operations: if this number differs from a predetermined number, the unit 9 causes the permanent breakage of the electrical ignition circuit of the engine, by means of the controlled switch 23, thus preventing ignition and starting of the engine.

The unit 9 may be arranged to allow the repeated input of the code for a predetermined number of times.

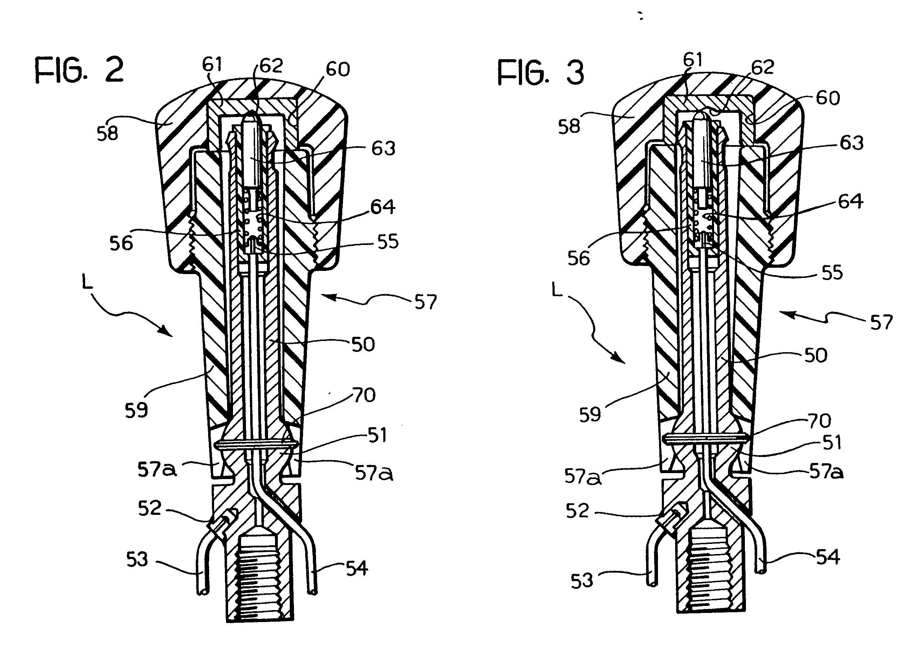

A preferred embodiment of the gear lever and the sensor 18 associated therewith will now be described with reference to Figures 2 and 3.

In the embodiment illustrated, the lever L comprises an inner tubular rod 50 of electrically conductive material having a ball-shaped enlargement 51. To this rod is connected a threaded terminal 52 to which the end of a conductor 53 is fixed. A second conductor 54, having an electrically insulating coating, extends within the rod 50 until it is close to its upper end and ends with a terminal 55 fixed in a tubular element 56 of electrically insulating material, which in its turn is inserted in a fixed position in the upper end of the rod 50.

The lever L further includes an outer body 57 constituted by an upper knob-shaped portion 58, and a lower tubular portion 59 screwed into the knob 58 to surround the inner rod 50 with clearance and having end projections 57a which surround the enlargement 51 of the rod 50 cooperatingly so as to form a ball joint therewith. The outer body 57 is of electrically insulating material.

A pin 70 is inserted transversely through the enlargement 51 of the rod 50 with its ends extending between pairs of projections 57a adjacent the outer body 57 to prevent the rotation of the latter relative to the rod 50.

A substantially cylindrical seat 60 is formed in the bottom of the knob 58 and a substantially cup-shaped conductor body 61 is located therein. The body 61 has its concavity facing the rod 50 and its side wall surrounding the upper end of the inner rod 50 with radial clearance. A conical recess 62 is formed in the downwardly facing surface of the bottom of the cup-shaped body 61 and acts as a reference seat or notch for the purposes which will now be described.

Within the tubular element 56 of insulating material is a movable body 63 of electrically conductive material, having a generally cylindrical shape with a rounded upper end. Between the movable body 63 and the terminal 55 is a spring 64 which biases the body 63 resiliently into engagement with the reference recess 62 in the cup-shaped body 61. The conductor 54 is permanently electrically connected to the cup-shaped body 61 by means of the terminal 55, the spring 64 and the movable body 63.

More particularly, when the movable body 63 engages the reference recess 62, the conductive body 61 is perfectly coaxial with the upper end of the inner rod 50 and the side wall of the body 61 is thus spaced from the rod 50. The side wall of the cup-shaped body 61 and the upper end of the inner rod 50 facing it constitute a pair of (normally-open) contacts of an omnidirectional switch interposed between the conductors 53 and 54.

When the user holds the knob 58 and starts to move the lever L towards another position, the outer body 57 is slightly offset relative to the inner rod 50 and the cup-shaped body 61, by thrusting the movable body 63 slightly downwardly against the action of the spring 64, comes into contact with the upper end portion of the inner rod 50, putting the conductors 53, 54 into electrical connection. Under these conditions, the switch constituted by the body 61 and the upper end of the rod 50 is closed (Figure 3).

Thus, when the user releases the lever L, the spring 64 thrusts the movable body 63 back into central engagement with the reference recess 62 of the body 61 again, returning the outer body 57 and the inner rod 50 of the gear lever into the relative position shown in Figure 2: the conductors 53, 54 are again disengaged.

The switch constituted by the body 61 and the inner rod 50 represents one particular embodiment of the detector indicated 18 in Figure 1. In addition to allowing the detection of the operating condition of the gear lever, this detector allows a positive command to be given to the control and operating unit 9 so that this unit causes the disengagement or engagement of the friction clutch 4 through the pilot system 8.

The lever L shown in Figures 2 and 3 has a simple, strong structure and is highly reliable in operation. The lever L shown in Figures 2 and 3 may be used for controlling any other known type of servo-controlled operation, for example, on excavators, tractors and the like, as well as for the use described above.

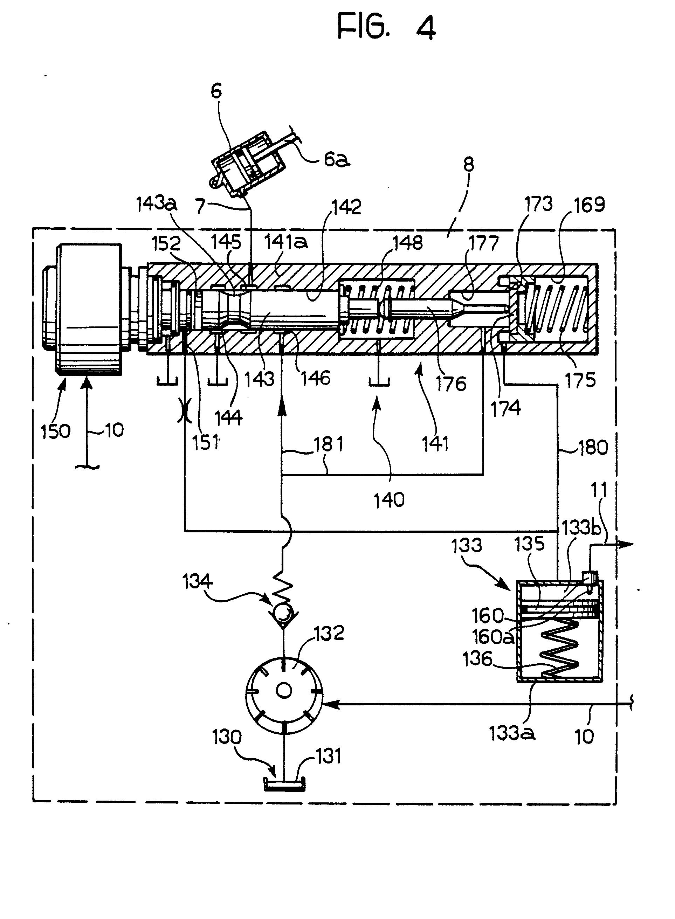

With reference to Figures 4 to 9, the electrohydraulic control system 8 will now be described in greater detail.

In the embodiment shown in Figure 2, the electrohydraulic system 8 comprises a reservoir 130 for hydraulic fluid 131, an electric pump 132, for example of the vaned type, having its intake connected to the reservoir 130 and its delivery connected to a non-return valve 134. The electrohydraulic system further includes an hydraulic accumulator 133.

This accumulator is preferably of the spring-type and includes a body 133a, and a movable member 135 sealingly slidable in the body under the action of a spring 136. In the embodiment of Figure 2, the region within the body 133a of the accumulator overlying the movable member 135 forms a variable volume chamber 133b into which pressurised fluid is fed when the pump 132 is actuated, as will be described below, to thrust the movable member 135 downwardly against the action of the spring 136.

The electric pump 132 and the accumulator 133 are connected to a hydraulic device with proportional electrical control, generally indicated 140. This device comprises a flow-modulating servo valve 141 including a substantially cylindrical hollow body 141a defining a chamber 142 in which a distributor member 143 is slidable. Three circumferential spaces 144—146 are formed in the wall of the chamber 142, the first being in communication with the discharge (the reservoir 130), the second being connected to the working cylinder 6 through the pipeline 7, and the third being connected to a pipeline 181 to which the delivery of the pump 132 is connected through the valve 134 in the manner shown in Figure 4.

The distributor member 143 has an annular groove 143a which, in the illustrated position of the distributor member, allows communication between chambers 144 and 145 and hence puts the actuator cylinder 6 into communication with the discharge. The distributor member 143 can take up a further axial position relative to the valve body 141a in which it puts the chambers 145 and 146 into communication and, as will become apparent below, allows the supply of pressure from the accumulator 133 to the actuator cylinder 6. The distributor member 143 is normally kept in the position illustrated in Figure 2 by the action of a spring 146 located in an intermediate chamber of the valve body 141a, as shown in Figure 4.

In one end of the valve body 141a is inserted a pilot valve with proportional electrical control, generally indicated 150.

The pilot solenoid valve 150 is of the known type generally called a "three-way modulating electro-pilot valve" and is, for example, of the type described in detail in Italian Patent Application No. 67914-A/81, equivalent to GB—A—2103390. In the de-energised condition the solenoid valve 150 uncouples the inlet 151 formed in the body 141a of the servo valve 141 from a pilot chamber 152 defined, as shown in Figure 4, between the valve 150, the end face of the distributor member 143 and the wall of the chamber 142 of the servo valve 141.

In the energised condition, the pilot solenoid valve 150 puts the pilot chamber 152 into communication with the inlet 151 of the servo valve 141, which is connected to the pressure accumulator 133. A variation in the strength of the current supplied to the control winding of the solenoid valve 150 can achieve a proportional variation in the pressure in the pilot chamber 152 and hence a proportional movement of the distributor member 143 of the servo valve 141. By controlling the energisation of the pilot solenoid valve 150, it is thus possible to control, that is, to modulate, the flow of hydraulic fluid which reaches the actuator cylinder 6 from the accumulator 133 through the servo valve 141.

As shown in Figure 2, a further chamber 169 at the end of the valve body 141a opposite the pilot solenoid valve 150 is formed with a valve seat 173 and a movable shutter 74 is thrust against this seat by a spring 175. A push rod 176 is located in series with the distributor member 143 between that end of the latter opposite the pilot valve 150 and the shutter 174.

The chamber 169 may communicate through the valve 173, 174 with an adjacent chamber 177 formed in the valve body 141a in which the push rod 176 extends. The outlet of the pressure accumulator 133 is connected to the chamber 169 by a pipeline 180; the chamber 177 is connected to the chamber 146 in the body of the valve 141 by the pipeline 181. The delivery of the electric pump 132 is connected to an intermediate point of this pipeline.

The pressure accumulator 133 preferably has a load-level sensor such as that indicated 160 in Figure 2. This sensor may be constituted simply by a microswitch provided with a movable operating member 160a located above the movable member 135 and operable by the latter when the pressure stored in the accumulator reaches a minimum value.

The sensor 160 is connected to the electronic unit 9 through the connecting line 11.

In operation, when the gear lever L is grasped (a condition indicated by the sensor 18) the electronic unit 9 energises the pilot solenoid valve 150.

As a result of the energisation of the pilot valve 150, the pilot chamber 152 is pressurised and the distributor member 143 moves to the right to cause the removal of the shutter 174 from the valve seat 173 against the action of the spring 175.

The pressurised fluid is fed from the accumulator 133 to the actuator cylinder 6 through the pipeline 180, the chamber 169, the chamber 177, the pipeline 181, the communicating chambers 146, 145 and the pipeline 7. The friction clutch is disengaged.

The electronic unit 9 actuates the electric pump to recharge the pressure accumulator 133 after a predetermined time.

When the pilot valve 150 is de-energised, the distributor member 143, the push rod 176 and the shutter 174 return to their respective positions shown in Figure 4 under the action of the springs 148, 175. In this situation, the shutter 174 opposes any flow of fluid from the outlet of the accumulator 133, whereby the electric pump 132 needs to operate relatively infrequently to recharge this accumulator.

Conveniently, the electric pump 132 is also operated each time the pilot valve 150 is energised. Thus, the accumulator 133 is quickly recharged each time the actuator cylinder 6 operates.

In the embodiment shown in Figure 4, the pilot valve 150 is a three-way modulating solenoid valve of the type adapted to prevent the flow of fluid from the supply inlet 151 to the discharge in the de-energised conditions. Instead of this type of pilot valve, of course, use may be made of a two-way modulating pilot solenoid valve of the type which does not cut off communication between the supply inlet and the discharge in the de-energised condition provided that there is a shut-off valve of the on/off type at the outlet from the accumulator 133, this shut-off valve being intended to be energised each time the pilot valve is energised.

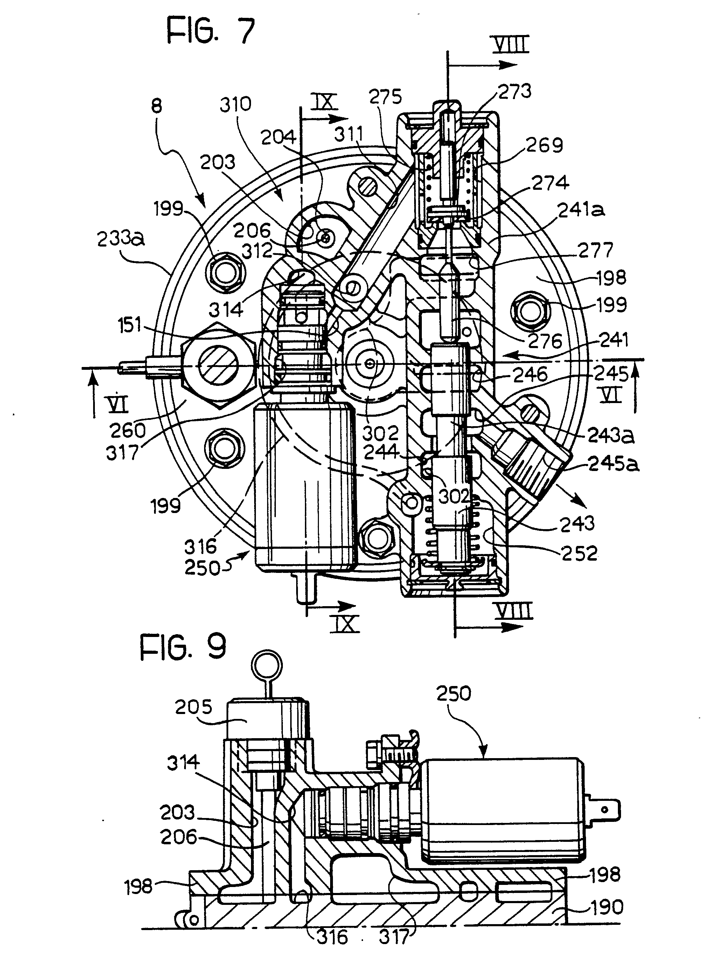

Figures 5 to 9 show a preferred constructional embodiment of the electro-hydraulic control system of Figure 4. These drawings employ the same reference numerals as used previously, increased by 100, for the components already described.

In the embodiment illustrated in Figures 5 and 9, the electro-hydraulic control system 8 includes an upwardly-open cylindrical container 233a. To the edge of the opening of this container is fixed a support structure, generally indicated 190 (Figure 6). This structure includes a substantially disc-shaped portion 190a and a substantially cylindrical tubular portion 190b which extends into the container 233a to within a certain distance from the bottom of the container.

A closure member 191 shaped substantially in the form of a disc and carrying a U-section sealing washer 192 around its periphery is connected to the lower end of the portion 190c of the structure 190.

A movable cup-shaped member 235 surrounds the support structure 190 and the closure element 191 in the container 233a.

The upper wall portion of the movable member 235 has one or more apertures 193 which put the region outside the movable member into communication with the region within it. The lower portion of the side wall of the movable member 235 is sealingly slidable on the closure member 191 in contact with the sealing washer 192.

The movable member 235 has an outwardly turned upper edge 235a.

A helical spring 236 surrounds the movable member 235 within the container 233a and acts at one end against the bottom of the container and at the other end against the outwardly turned edge of the movable member 235. The spring 236 biasses the movable member 235 upwardly. The bottom portion of the latter, together with the closure member 191, defines a variable-volume chamber 233b.

The closure member 191 has one or more through aperatures 194 which put the chamber 233b into communication with the region within the portion 190b of the support structure 190. The closure member 191 is also formed with radial passages 195 which put the region between the movable member 235 and the support structure 190 into communication with the central chamber 196 formed within the closure member itself.

An electric pump 232 of known type is located within the portion 190b of the support structure and rests on the closure member 191. The pump 232 has an intake 232a communicating with the chamber 196 of a closure member 191. The delivery of the pump 232 is located on the opposite side from the intake and is indicated 232b. The body of the electric pump 232 has an upper aperture 232c for the passage of the conductors 210 for supplying its electric motor (not shown). As shown particularly in Figure 6, the diameter of the body of the pump 232 is less than the internal diameter of the portion 190b of the support structure 190, whereby the pump and this portion of the support structure define between them an annular chamber 197 communicating with the variable-volume chamber 233b through the passage 194.

A cover 198 is fixed to the portion 190a of the support structure 190 by bolts 199. This cover has an aperture 200 aligned with a corresponding aperture 201 in the portion 190a of the support structure 190 (Figure 6). The body of a microswitch 260 is fixed in the aperture 200 of the cover 198, the movable member 260a of which extends through the aperture 201 in the support structure 190 towards the outwardly turned edge 235a of the movable member 235.

The cover 198 has a further aperture 203 (Figures 7 and 9) adjacent a through hole 204 (Figure 7) formed in the portion 190a of the structure 190. Within this aperture 203 of the cover 198 is fixed a screw plug 205 (Figures 9 and 6). Hydraulic fluid, for example oil, can be poured into the container 233a through the aperture 203 in the cover 198 and the corresponding aperture 204 in the support structure 190 after the removal of the plug 205. In Figure 6 the oil is indicated 0. The oil 0 reaches the region within the movable member 235 through the apertures 193 and reaches the intake 232a of the electric pump 232 through the duct 195 formed in the closure member 191.

As shown particularly in Figure 9, a small rod 206 is connected to the plug 205 for allowing the measurement of the oil level within the container 233a.

A valve unit 241, which is functionally equivalent to the servo valve 141 described above with reference to Figure 4, is formed integrally with the cover 198. The valve unit 241 comprises a body 241a formed integrally with the cover 198 and defining a pilot chamber 252 and three further chambers 244—246 corresponding respectively to the chambers 152 and 145—146 of the servo valve 141 shown in Figure 4. A distributor member 243 is slidable axially in the body of the valve 241 and has an annular recess 243a similar to the distributor member 143 of the servo valve shown in Figure 4. Under normal conditions the distributor member 243 puts the chambers 244 and 245 into communication; the latter has an outlet 245a (Figures 5 and 7) for connection to the actuator cylinder 6.

Further chambers 269 and 277 are formed in the body of the valve 241 as shown in Figures 7 and 8. A pusher 276 disposed axially in series with the

**0 136 267**

distributor member 243a cooperates with a shutter 274 thrust by a spring 275 against a valve seat 273 to keep the chambers 269, 277 normally separate.

The valve 241 described above, apart from the differences of constructional detail, corresponds entirely and wholly to the servo valve 141 shown in Figure 4.

The chamber 244 is formed partly in the body 241a of the valve 241 and partly by a recess 301 in the upper face of the portion 190a of the support structure 190 (Figure 8). As shown in Figure 7, the chamber 244 communicates with the region within the container 233a above the oil O through a discharge aperture indicated 302.

The chambers 246 and 277 are permanently in communication through a chamber 302 formed partly as a recess in the upper face of the portion 190a of the support structure 190. The periphery of the chamber 302 is indicated in broken outline in Figure 7. As shown in Figure 6, the chamber 302 communicates with the delivery 232b of the electric pump 232 by means of a non-return ball valve 234.

The cover 198, adjacent the servo valve 241, supports the pilot valve 250 which, in the example illustrated in Figure 7, is of the three-way type described in the aforementioned Italian Patent Application. A connecting part 310 is formed integrally with the cover 198 and joins the valve 241 to the pilot solenoid valve 250. More particularly, a duct 311 is formed in this connecting portion 310 and connects the chamber 269 of the servo valve 241 to the supply inlet 251 of the pilot solenoid valve 250 (Figure 7). The duct 311 is connected to the annular chamber 197 between the electric pump 232 and the tubular portion 190b of the support structure 190 by means of a through hole indicated 312 in Figure 7.

In the connecting portion 310 of the cover 198, adjacent the outlet of the pilot solenoid 250, is formed a chamber 314 which communicates with a chamber 252 of the servo valve 241 by means of a duct 316 formed as a recess in the upper face of the portion 190a of the support structure 190 and illustrated in broken outline in Figure 7. The pilot solenoid valve 250 is also connected to the region within the container 233a by means of a chamber 317 (Figures 6, 7 and 9) and a duct 318 formed in the support structure 190 (Figure 6).

Adjacent the edge of the upper aperture of the container 233a, on its inner surface, there is an annular recess 320 in which a very hard rubber ring 321 is located. This ring acts both as a sealing ring and as a member for the axial retention of the support structure 190 and the cover 198 connected thereto relative to the container 233a.

The electrohydraulic system shown in Figures 5 to 9 operates as follows.

As stated above, the oil O contained in the container reaches the intake of the pump 232a through the slots 193 in the movable member 235 and the radial passages 195 formed in the closure member 191. When the pump is actuated, pressurised oil is pumped through the non-return valve 234 into the chamber 302 and then into the chambers 277 and 246 of the servo valve 241. The pressure created in the chamber 277 causes the shutter 274 to move against the action of the spring 275: the chamber 277 is put into communication with the chamber 269. The pressurised oil, pumped by the electric pump from the chamber 269 through the duct 311 and the through hole 312, reaches the annular chamber 197 between the body of the electric pump and the portion 190b of the support structure 190 and thence reaches the variable-volume chamber 233b through the passage 194. As a result of the pressure which accumulates in this chamber the movable member 235 is thrust towards the bottom of the container 233a, loading the helical spring 236. The chamber 233b thus acts as a pressure accumulator. The microswitch 260 outputs a two-state signal indicative of the almost empty condition of the accumulator and the sufficiently full condition of the accumulator, respectively.

The pilot solenoid valve 250 is normally de-energised and its inlet 314 is thus disconnected from the chamber 312. When this solenoid valve is energised in operation, the pressurised fluid flows from the chamber 233b through the chamber 197 and the passage 314, and reaches the supply inlet 314 of this solenoid valve. This inlet is thus put into communication with the outlet chamber 314 of the solenoid valve 250. The degree of connection between the inlet and the outlet depends on the strength of the excitation current supplied to the winding of the solenoid valve 250. The pressurised fluid passes from the outlet of the solenoid valve 250 through the duct 316 and reaches the pilot chamber 252 of the servo valve 241. The distributor member 243 is thrust towards the shutter 274 and the chambers 246 and 245 are put into communication. Simultaneously, the distributor member 243, by means of the pusher 276, moves the shutter 274 to put the chambers 269 and 277 into communication. The pressurised fluid in the chamber 233b may then reach the outlet 245a and the actuator cylinder, passing through the annular chamber 197, the hole 312 (Figure 7), the duct 311, the chamber 269, the chamber 277, the connecting chamber 302 and the interconnected chambers 246, 245.

As stated above, the electric pump 232 is actuated each time the solenoid valve 250 is energised to allow the recharging of the accumulator constituted by the variable-volume chamber 233b, the movable member 235 and the spring 236.

The hydraulic unit according to the invention described above allows a considerable reduction both in the installation costs and the cost of the various components therein, and also allows a considerable reduction in bulk. The unit lends itself for use as a modular unit in all applications in which its components are required.

**Claims**

1. System for controlling the operation of the power train of a motor vehicle, the power train including an internal combustion engine (1) and a transmission having a friction clutch (4) and a gearbox operated by a control lever (L), the system comprising:

sensor means (12, 16, 19) for providing electrical signals indicative of the speed of the vehicle, the rate of rotation of the engine (1), and the position of the gear lever (L);

detector means (18) for providing a control signal when the gear lever (L) is operated;

first actuator means (23; 30) for stopping and allowing the re-starting of the engine (1) when activated and de-activated, respectively;

second actuator means (6, 8) for disengaging and engaging the friction clutch (4) when activated and de-activated, respectively, and

a control unit (9) connected to the sensor means (12, 16, 19), the detector means (18), the first and second actuator means (23, 30; 6, 8) and the electric starter motor (27), and arranged to:

activate the first actuator means (23, 30) when the signals output by the sensor means (12, 16, 19) indicate that the engine (1) is running, the friction clutch (4) is engaged, the gearbox is in neutral, and the speed of the vehicle is less than a predetermined value;

de-activate the first actuator means (23, 30) and restart the engine when the detector means (18) indicate that the gear lever (L) has been operated, and

activate the second actuator means each time the detector means output said control signal, characterised in that it further includes manually-operable input means (18) connected to the control and operating unit (9) to allow the composition of coded signals, the said input means comprising the gear lever (L), and in that said unit (9) is arranged to keep the first and/or second actuator means (23, 30; 6, 8) permanently activated when the coded signals composed by means of the gear lever (L) differ from a predetermined combination.

2. System according to Claim 1, in which the detector means include an omni-directional electric switch including first and second cooperating electrical contacts (50, 61) which can effect relative movement as a result of the operation of the gear lever (L), characterised in that the gear lever (L) includes:

an internal rod (50) carrying the first contact,

an outer hollow body (57, 58, 59) which is supported by the rod (50) and carries the second contact (61) internally, and which can effect limited displacements relative to the rod (50) between a rest position in which the contacts (50, 61) are spaced from each other and a plurality of working positions in which the contacts (50, 61) touch, and

resilient positioning and return means (64, 63) which tend to keep and/or return the rod (50) and the outer body (57, 58, 59) to their relative rest position.

3. System according to Claim 2, characterised in that the rod (50) has a ball-shaped enlargement (51) in an axial position and the outer body (57) has a substantially tubular form and surrounds the rod (50) with limited radial clearance, the outer body (57) being articulated to the rod (50) by means of a ball joint (57a, 51).

4. System according to Claim 3, characterised in that the end of the outer body (57) nearer the ball portion (51) of the inner rod (50) has a plurality of longitudinal-projections (57a) which can open out resiliently to engage the ball portion (51) of the rod (50).

5. System according to Claim 4, characterised in that the ball portion (51) of the inner rod (50) has a pin (70) inserted transversely therethrough, the ends of the pin extending between adjacent pairs of projections (57a) of the outer body (57) to prevent the rotation of the latter relative to the inner rod (50).

6. System according to Claim 4 or 5, characterised in that the positioning and return means include

a member (63) movable axially relative to the end of the rod (50) and housed in the outer body (57), and

resilient means (64) acting at one end against the rod (50) and at the other against the movable member (63) to thrust this movable member (63) into engagement with a reference depression or notch (62) in the outer body (57, 58, 59).

7. System according to Claim 6, characterised in that the reference depression or notch (62) is substantially conical in shape and the end of the movable member (63) engageable with the notch (62) is rounded.

8. System according to Claim 7, characterised in that the outer body (57—59) houses a cup-shaped body (61) of electrically conductive material, the bottom of which faces the movable member (63) and has the reference depression or notch (62), and the side wall of which at least partially surrounds the upper end of the inner rod (50), with clearance; the rod (50) is substantially tubular and is made of electrically conductive material, a tubular·element (56) of electrically insulating material being inserted in the rod (50); and the movable member (63) is also of electrically conductive material and is arranged so as to be axially movable within the electrically insulating tubular member (56) under the action of a spring (64) biassing it outwardly of the rod (50) towards the reference notch (62) formed in the bottom of the cup-shaped body (61).

9. System according to Claim 8, characterised in that a first electrical conductor (53) is connected to the rod (50) and a second electrical conductor (54) with an insulating coating extends within the rod (50) and ends with a terminal (55) inserted in the tubular insulating element (56), the spring (64) also being of electrically conductive material and bearing against the terminal (55).

10. System according to any one of the preceding Claims, in which the second actuator means include an electro-hydraulic control unit (2) including a hydraulic fluid reservoir, a pressure accumulator, and a pump for recharging the accumulator, characterised in that the electro-hydraulic unit (8) includes:

a container (233a) acting as a reservoir;

a support structure (190, 190a, 190b; 191) fixed within the container (233a) and including a pump (232);

a member (235) movable in the container (233a) and defining a variable-volume chamber (233b) with said structure (190, 191), and

resilient means (236) biasing the movable member (235) into a position corresponding to the minimum volume of the chamber (233b);

the intake (232a) of the pump (232) communicating with that portion of the container (233a) containing the hydraulic fluid (0), and the delivery (232b) of the pump (232) communicating with the variable-volume chamber (233b) so that, in operation, the pump transfers pressurised fluid from the container (233a) to the variable-volume chamber (233b) against the action of the resilient means (236), the variable-volume chamber thus acting as a pressure accumulator.

11. System according to Claim 10, characterised in that it further includes electrical sensor means (260) arranged to output electrical signals indicative of the pressure accumulated in the variable-volume chamber (233b).

12. System according to Claim 11, characterised in that the electrical sensor means comprise electrical position sensor means (260) carried by the container (233a) in a fixed position for providing electrical signals indicative of the position of the movable member (235) relative to the support structure (190, 191).

13. System according to Claim 12, characterised in that the electrical position sensor means comprise a microswitch (260, 260a).

14. System according to any one of Claims 10 to 13, characterised in that a non-return valve (234) is located between the delivery (232b) of the pump (232) and the variable-volume chamber (233b) to prevent the flow of fluid from the chamber (233b) to the pump (232).

15. System according to Claim 14, characterised in that the movable member (235) is cup-shaped and is disposed within the container (233a) around the support structure (190, 191), and is axially sealingly slidable on the support structure.

16. System according to Claim 15, characterised in that the cup-shaped movable member (235) has an edge (235a) turned at least partially outwardly, and the resilient means include a helical spring (236) disposed in the container (233a) and bearing at one end against the bottom of the container and at the other end against the outwardly-turned portion or portions of the edge of the cup-shaped movable member (235).

17. System according to one or more of Claims 10 to 16, particularly for controlling a hydraulic actuator (6), characterised in that it further includes a hydraulic device (250, 241) with proportional electric control fixed to the support structure (190) and including a modulating servo valve (241) connected to the variable-volume chamber (233b) and connectible to the actuator device (6), and a pilot valve (250) with proportional electric control for modulating the pressure in the pilot chamber (252) of the servo valve (241) and hence for modulating the hydraulic fluid flow from the variable-volume chamber (233b) and the actuator device (6).

18. System according to Claim 17, characterised in that it further includes a normally-closed shutter valve (273—277) fixed to the support structure (190) and interposed between the variable-volume chamber (233b) and the servo valve (241), and intended to be opened each time the pilot valve (250) supplied pressure in the pilot chamber (252).

19. System according to Claim 18, in which the servo valve (241) includes a valve body (241a) and member (243) movable in this body in dependence on the pressure in the pilot chamber (252), characterised in that the shutter valve (273—277) is formed integrally in the valve body (241a) of the servo valve (241) and includes a shutter (274) movable against the action of resilient biasing means (275) under the effect of a movement of the movable member (243) of the servo valve (241).

**Patentansprüche**

1. System, um die Arbeitsweise des Kraftübertragungswegs eines Kraftfahrzeugs zu steuern, wobei der Kraftübertragungsweg einen Verbrennungsmotor (1) sowie eine Übertragung aufweist, die eine Reibungskupplung (4) sowie ein Schaltgetriebe besitzt, das von einem Schalthebel (L) betätigt wird, wobei das System enthält:

eine Fühlereinrichtung (12, 16, 19), um elektrische Signale zu liefern, die die Geschwindigkeit des Fahrzeugs, die Drehzahl des Motors (1) sowie die Stellung des Schalthebels (L) anzeigen;

einen Detektor (18), um ein Steuersignal zu liefern, wenn der Schalthebel (L) betätigt wird;

einen ersten Stellantrieb (23; 30), um den Motor (1) anzuhalten und einen Wiederanlauf zu ermöglichen, wenn der erste Stellantrieb in Betrieb bzw. außer Betrieb gesetzt wird;

einen zweiten Stellantrieb (6, 8), um die Reibungskupplung (4) auszurücken und einzurücken, wenn der zweite Stellantrieb in Betrieb bzw. außer Betrieb gesetzt wird, sowie

eine Steuereinheit (9), dit mit der Fühlereinrichtung (12, 16, 19), dem Detektor (18), dem ersten und zweiten Stellantrieb (23, 30; 6, 8) sowie dem elektrischen Anlasser (27) verbunden und so angeordnet ist, um:

den ersten Stellantrieb (23, 30) in Betrieb zu setzen, wenn die von der Fühlereinrichtung (12, 16, 19) abgegebenen Signale anzeigen, daß der Motor (1) läuft, die Reibungskupplung (4) eingerückt ist, das Getriebe in der Stellung "Leerlauf" liegt und die Geschwindigkeit des Fahrzeugs kleiner als ein vorgegebener Wert ist;

den ersten Stellantrieb (23, 30) außer Betrieb zu setzen und den Motor wieder anzulassen, wenn der Detektor (18) anzeigt, daß der Schalthebel (L) betätigt wurde und

den zweiten Stellantrieb jedesmal in Betrieb zu setzen, wenn der Detektor das Steuersignal abgibt, dadurch gekennzeichnet, daß das System weiters eine händisch betätigbare Eingangsstufe (18) aufweist, die mit der Steuer- und Betriebseinheit (9) verbunden ist, um die Zusammensetzung von kodierten Signalen zu ermöglichen, wobei die Eingangsstufe den Schalthebel (L) enthält, und daß die Einheit (9) angeordnet ist, um den ersten und/oder zweiten Stellantrieb (23, 30; 6, 8) fortlaufend in Betrieb zu halten, wenn sich die mit Hilfe des Schalthebels (L) zusammengesetzten kodierten Signale von einer vorgegebenen Kombination unterscheiden.

2. System gemäß Anspruch 1, wobei der Detektor einen elektrischen Allrichtungsschalter aufweist, der erste und zweite zusammenwirkende elektrische Kontakte (50, 61) enthält, die als Ergebnis der Betätigung des Schalthebels (L) eine relative Bewegung ausführen können, dadurch gekennzeichnet, daß der Schalthebel (L) aufweist:
eine Innenstange (50), die den ersten Kontakt trägt,
einen hohlen Außenkörper (57, 58, 59), der von der Stange (50) getragen wird, innen den zweiten Kontakt (61) trägt und begrenzte Verschiebungen relativ zur Stange (50) zwischen einer Ruhestellung, in der die Kontakte (50, 61) voneinander beabstandet sind, sowie einer Vielzahl von Arbeitsstellungen durchführen kann, in der sich die Kontakte (50, 61) berühren, sowie eine federnde Einstell- und Rückführeinrichtung (64, 63), die die Stange (50) und den Außenkörper (57, 58, 59) in deren relativer Ruhestellung halten und/ oder in diese zurückführen möchte.

3. System gemäß Anspruch 2, dadurch gekennzeichnet, daß die Stange (50) an einer axialen Stelle eine kugelförmige Erweiterung (51) besitzt, wobei der Außenkörper (57) im wesentlichen rohrförmig ausgebildet ist und die Stange (50) mit einem begrenzten radialen Zwischenraum umschließt, wobei der Außenkörper (57) mit der Stange (50) mit Hilfe eines Kugelgelenks (57a, 51) gelenkig verbunden ist.

4. System gemäß Anspruch 3, dadurch gekennzeichnet, daß das Ende des Außenkörpers (57), das dem Kugelteil (51) der Innenstange (50) näher liegt, eine Vielzahl von Längsvorsprüngen (57a) besitzt, die sich nach außen elastisch öffnen können, um in den Kugelteil (51) der Stange (50) einzugreifen.

5. System gemäß Anspruch 4, dadurch gekennzeichnet, daß der Kugelteil (51) der inneren Stange (50) einen Zapfen (70) besitzt, der quer hindurch eingesetzt wird, wobei die Enden des Zapfens zwischen benachbarten Paaren von Vorsprüngen (57a) des Außenkörpers (57) verlaufen, um eine Drehung des Außenkörpers (57) relativ zur Innenstange (50) zu verhindern.

6. System gemäß Anspruch 4 oder 5, dadurch gekennzeichnet, daß die Einstell- und Rückführeinrichtung aufweist:
einen Teile (63), der axial relativ zum Ende der Stange (50) bewegbar und im Außenkörper (57) untergebracht ist, sowie
eine Federeinrichtung (64), die an einem Ende gegen die Stange (50) und am anderen Ende gegen den bewegbaren Teil (63) wirkt, um diesen bewegbaren Teil (63) mit einer Bezugsvertiefung oder Kerbe (62) im Außenkörper (57, 58, 59) in Eingriff zu drücken.

7. System gemäß Anspruch 6, dadurch gekennzeichnet, daß die Bezugsvertiefung oder Kerbe (62) eine im wesentlichen konische Form besitzt, wobei das Ende des bewegbaren Teils (63), das in die Kerbe (62) eingreifen kann, abgerundet ist.

8. System gemäß Anspruch 7, dadurch gekennzeichnet, daß der Außenkörper (57—59) einen topfförmigen Körper (61) aus einem elektrisch leitenden Material aufnimmt, dessen Boden dem bewegbaren Teil (63) gegenüber liegt und eine Bezugsvertiefung oder Kerbe (62) besitzt, wobei dessen Seitenwand zumindest teilweise das obere Ende der Innenstange (50) mit einem Abstand umgibt; daß die Stange (50) im wesentlichen rohrförmig ausgebildet ist und aus einem elektrisch leitenden Material besteht, wobei ein rohrförmiges Element (56) aus einem elektrisch isolierenden Material in die Stange (50) eingesetzt wird; und daß der bewegbare Teil (63) ebenfalls aus einem elektrisch leitenden Material besteht und so angeordnet ist, daß er innerhalb des elektrisch isolierenden rohrförmigen Teils (56) unter der Wirkung einer Feder (64) axial bewegbar ist, die ihn aus der Stange (50) zur Bezugskerbe (62) vorspannt, die im Boden des topfförmigen Körpers (61) ausgebildet ist.

9. System gemäß Anspruch 8, dadurch gekennzeichnet, daß ein erster elektrischer Leiter (53) mit der Stange (50) verbunden ist und ein zweiter elektrischer Leiter (54) mit einem Isolierbelag innerhalb der Stange (50) verläuft und in einem Anschlußteil (55) endet, der in das rohrförmige Isolierelement (56) eingesetzt ist, wobei die Feder (64) ebenfalls aus einem elektrisch leitenden Materials besteht und am Anschlußteil (55) ruht.

10. System gemäß jedem der bisherigen Ansprüche, wobei der zweite Stellantrieb eine elektro-hydraulische Steuereinheit (2) aufweist, die einen Hydraulikflüssigkeitsbehälter, einen Drucksammler, sowie eine Pumpe enthält, um den Sammler nachzufüllen, dadurch gekennzeichnet, daß die elektro-hydraulische Einheite (8) aufweist:
einen Behälter (233a), der als Vorratsbehälter dient;
einen Tragaufbau (190, 190a, 190b; 191), der im Behälter (233a) befestigt ist und eine Pumpe (232) aufweist;
einen Teil (235), der im Behälter (232a) bewegbar ist und mit dem Aufbau (190, 191) eine Kammer mit variablen Volumen (233b) bildet, sowie eine Federeinrichtung (236), die den bewegbaren Teil (235) in eine Stellung vorspannt, die dem minimalen Volumen der Kammer (233b) entspricht;
wobei die Ansaugseite (232a) der Pumpe (232) mit jenem Teil des Behälters (233a) in Verbindung steht, der die Hydraulikflüssigkeit (0) enthält, und die Förderseite (232b) der Pumpe (232) mit der Kammer mit variablem Volumen (233b) so in Verbindung steht, daß im Betrieb die Pumpe eine unter Druck stehende Flüssigkeit vom Behälter (233a) zur Kammer mit variablen Volumen (233b) gegen die Wirkung der Federeinrichtung (236) fördert, womit die Kammer mit variablem Volumen als Drucksammler arbeitet.

11. System gemäß Anspruch 10, dadurch gekennzeichnet, daß es weiters eine elektrische Fühlereinrichtung (260) aufweist, die angeordnet ist, um elektrische Signale abzugeben, die den Druck kennzeichnen, der in der Kammer mit variablem Volumen (233b) gesammelt ist.

12. System gemäß Anspruch 11, dadurch gekennzeichnet, daß die elektrische Fühlereinrichtung einen elektrischen Stellungsfühler (260) enthält, der vom Behälter (233a) in einer festen Stellung gehalten wird, um elektrische Signale zu liefern, die die Lage des bewegbaren Teils (235) relativ zum Tragaufbau (190, 191) anzeigen.

13. System gemäß Anspruch 12, dadurch gekennzeichnet, daß der elektrische Stellungsfühler einen Mikroschalter (260, 260a) enthält.

14. System gemäß jedem der Ansprüche 10 bis 13, dadurch gekennzeichnet, daß zwischen der Förderseite (232b) der Pumpe (232) und der Kammer mit variablem Volumen (233b) ein Rückschlagventil (234) angeordnet ist, um eine Flüssigkeitsströmung von der Kammer (233b) zur Pumpe (232) zu verhindern.

15. System gemäß Anspruch 14, dadurch gekennzeichnet, daß der bewegbare Teil (235) topfförmig ausgebildet und im Behälter (233a) rund um den Tragaufbau (190, 191) angeordnet ist, wobei er axial abgedichtet auf dem Tragaufbau verschiebbar ist.

16. System gemäß Anspruch 15, dadurch gekennzeichnet, daß der topfförmige, bewegbare Teil (235) einen Rand (235a) besitzt, der zumindeste teilweise nach außen gedreht ist, wobei die Federeinrichtung eine Schraubenfeder (236) aufweist, die im Behälter (233a) angeordnet ist, wobei sie mit einem Ende auf dem Boden des Behälters und mit dem anderen Ende auf dem nach außen gedrehten Teil oder Teilen des Rands des topfförmigen, bewegbaren Teils (235) ruht.

17. System gemäß einem oder mehreren der Ansprüche 10 bis 16, besonders für die Steuerung eines hydraulischen Stellantriebs (6), dadurch gekennzeichnet, daß es weiters eine Hydraulikeinrichtung (250, 241) mit einer elektrischen Proportionalregelung aufweist, die am Tragaufbau (190) befestigt ist und ein moudlierendes Servoventil (241) aufweist, das mit der Kammer mit variablem Volumen (233b) verbunden ist und mit dem Stellantrieb (6) verbunden werden kann, sowie ein Steuerventil (250) mit einer elektrischen Proportionalregelung aufweist, um den Druck in der Steuerkammer E(252) des Servoventils (241) zu modulieren und damit die Strömung der Hydraulikflüssigkeit von der Kammer mit variablem Volumen (233b) und dem Stellantrieb (6) zu modulieren.

18. System gemäß Anspruch 17, dadurch gekennzeichnet, daß es weiters ein normalerweise geschlossenes Absperrventil (273—277) aufweist, das am Tragaufbau (190) befestigt ist und zwischen der Kammer mit variablem Volumen (233b) und dem Servoventil (241) liegt, wobei es dazu dient, um jedesmal geöffnet zu werden, wenn das Steuerventil (250) Druck in die Steuerkammer (252) liefert.

19. System gemäß Anspruch 18, wobei das Servoventil (241) einen Ventilkörper (241a) sowie einen Teile (243) aufweist, der in diesem Körper in Abhängigkeit vom Druck in der Steuerkammer (252) bewegbar ist, dadurch gekennzeichnet, daß das Absperrventil (273—277) gemeinsam mit dem Ventilkörper (241a) des Servoventils (241) ausgebildet ist und einen Verschluß (274) aufweist, der gegen die Wirkung einer elastischen Vorspannungseinrichtung (275) unter dem Einfluß einer Bewegung des bewegbaren Teils (243) des Servoventils (241) bewegt werden kann.

**Revendications**

1. Dispositif pour commander le fonctionnement du groupe propulseur d'un véhicule automobile, ce groupe propulseur comprenant un moteur à combustion interne (1) et une transmission qui comprend elle-même un embrayage à friction (4) et une boîte de vitesses actionnée par un levier de vitesses (L), le dispositif comprenant:

des moyens capteurs (12, 16, 19) destinés à fournir des signaux électriques indicatifs de la vitesse du véhicule, du régime de rotation du moteur (1) et de la position du levier de vitesses (L);

des moyens détecteurs (18) destinés à fournir un signal de commande lorsqu'on actionne le levier de vitesses (L);

des premiers moyens actionneurs (23; 30) destinés à arrêter et à permettre la remise en marche du moteur (1) lorsqu'ils sont respectivement activés et désactivés;

des deuxièmes moyens actionneurs (6, 8) servant à embrayer et débrayer l'embrayage à friction (4) lorsqu'ils sont respectivement activés et désactivés; et

une unité de commande (9) connectée aux moyens capteurs (12, 16, 19), aux moyens détecteurs (18), aux premiers et deuxièmes moyens actionneurs (23, 30; 6, 8) et au démarreur électrique (27), et agencée pour:

activer les premiers moyens actionneurs (23, 30) lorsque les signaux émis par les moyens capteurs (12, 16, 19) indiquent que le moteur (1) est en marche, que l'embrayage à friction (4) est embrayé, que la boîte de vitesses est au point mort et que la vitesse du véhicule est inférieure à une valeur prédéterminée;

désactiver les premiers moyens actionneurs (23, 30) et remettre le moteur en marche lorsque les moyens détecteurs (18) indiquent que le levier de vitesses (L) a été maneouvré; et

activer les deuxièmes moyens actionneurs chaque fois que les moyens détecteurs émettent ledit signal de commande, caractérisé en ce qu'il comprend en outre des moyens d'entrée (18) manoeuvrés manuellement et reliés à l'unité de contrôle- commande (9) pour permettre la composition de signaux codés, lesdits moyens d'entrée comprenant le levier de vitesses (L), et en ce que ladite unité (9) est agencée pour maintenir les premiers et/ou deuxièmes moyens actionneurs (23, 30; 6, 8) activés en permanence lorsque les signaux codés composés au moyen du levier de vitesses (L) diffèrent d'une combinaison prédéterminée.

2. Dispositif selon la revendication 1, dans lequel les moyens détecteurs comprennent un interrupteur électrique omnidirectionnel comprenant un premier et un deuxième contacts électriques coopérant entre eux (50, 61) qui peuvent décrire un mouvement relatif sous l'effet de la manoeuvre du levier de vitesses (L), caractérisé en ce que le levier de vitesses (L) comprend:

une tige intérieure (50) qui porte le premier contact,

un corps creux extérieur (57, 58, 59) qui est supporté par la tige (50) et porte le deuxième contact (61) intérieurement, et qui peut décrire des déplacements limités par rapport à la tige (50) entre une position de repos dans laquelle les contacts (50, 61) sont espacés l'un de l'autre et une pluralité de positions de travail dans lesquelles les contacts (50, 61) se touchent, et

des moyens élastiques de positionnement et de rappel (64, 63) qui tendent à maintenir et/ou à ramener la tige (50) et le corps extérieur (57, 58, 59) à leurs positions relatives de repos.

3. Dispositif selon la revendication 2, caractérisé en ce que la tige (50) présente un renflement (51) de forme sphérique en un point de sa longueur axiale et le corps extérieur (57) possède une forme sensiblement tubulaire et entoure la tige (50) avec un jeu radial limité, le corps extérieur (57) étant articulé à la tige (50) au moyen d'un joint à rotule (57a, 51).

4. Dispositif selon la revendication 3, caractérisé en ce que l'extrémité du corps extérieur (57) qui est la plus proche de la partie sphérique (51) de la tige intérieure (50) présente une pluralité de saillies longitudinales (57a) qui peuvent s'ouvrir élastiquement pour coopérer avec la partie sphérique (51) de la tige (50).

5. Dispositif selon la revendication 4, caractérisé en ce que la partie sphérique (51) de la tige intérieure (50) présente une goupille (70) insérée transversalement à travers elle, les extrémités de la goupille s'étendant entre des paires adjacentes de saillies (57a) du corps extérieur (57) pour empêcher ce dernier de tourner par rapport à la tige intérieure (50).

6. Dispositif selon la revendication 4 ou 5, caractérisé en ce que les moyens de positionnement et de rappel comprennent

un élément (63) mobile axialement par rapport à l'extrémité de la tige (50) et logé dans le corps extérieur (57), et

des moyens élastiques (64) qui agissent, à une extrémité, contre la tige (50) et, à l'autre extrémité, contre l'élément mobile (63) pour pousser cet élément mobile (63) en prise avec une empreinte ou encoche de référence (62) ménagée dans le corps extérieur (57, 58, 59).

7. Dispositif selon la revendication 6, caractérisé en ce que l'empreinte ou encoche de référence (62) est de forme sensiblement conique tandis que l'extrémité de l'élément mobile (63) qui peut être mise en prise avec l'encoche (62) est arrondie.

8. Dispositif selon la revendication 7, caractérisé en ce que le corps extérieur (57, 59) renferme un corps en forme de godet (61) fait d'une matière conductrice de l'électricité, dont le fond regarde vers l'élément mobile (63) et présente l'empreinte ou encoche de référence (62), et dont la paroi latérale entoure au moins partiellement l'extrémité supérieure de la tige intérieure (50) avec jeu; la tige (50) est sensiblement tubulaire et est faite d'une matière conductrice de l'électricité, un élément tubulaire (56) en matière isolante de l'électricité étant inséré dans la tige (50); et l'élément mobile (63) est lui aussi fait d'une matière conductrice de l'électricité et est agencé de manière à pouvoir se déplacer axialement dans l'élément tubulaire isolant de l'électricité (56) sous l'action d'un ressort (64) qui le sollicite vers l'extérieur de la tige (50), vers l'encoche de référence (62) formée dans le fond du corps en forme de godet (61).

9. Dispositif selon la revendication 8, caractérisé en ce qu'un premier conducteur électrique (53) est connecté à la tige (50) et un deuxième conducteur électrique (54) muni d'un revêtement isolant s'étend dans la tige (50) et se termine par une borne (55) insérée dans l'élément isolant tubulaire (56), le ressort (64) étant lui aussi fait d'une matière conductrice de l'électricité et portant contre la borne (55).

10. Dispositif selon l'une quelconque des revendications précédentes, dans lequel les deuxièmes moyens actionneurs comprennent une unité de commande électro-hydraulique (2) comprenant un réservoir de fluide hydraulique, un accumulateur de pression et une pompe destinée à recharger l'accumulateur, caractérisé en ce que l'unité électro-hydraulique (8) comprend:

un conteneur (233a) jouant le rôle d'un réservoir;

une structure support (190, 190a, 190b; 191) fixée à l'intérieur du conteneur (233a) et comprenant une pompe (232);

un élément (235) qui peut se déplacer dans le conteneur (233a) et définit une chambre à volume variable (233b) avec ladite structure (190, 191); et

des moyens élastiques (236) qui tendent à placer l'élément mobile (235) dans une position qui correspond au volume minimum de la chambre (233b);

l'entrée (232a) de la pompe (232) communiquant avec la partie du conteneur (233a) qui contient le fluide hydraulique (0), et le refoulement (232b) de la pompe (232) communiquant avec la chambre à volume variable (233b) de sorte que, en fonctionnement, la pompe transfère du fluide sous pression du conteneur (233a) à la chambre à volume variable (233b) à l'encontre de l'action des moyens élastiques (236), la chambre à volume variable jouant ainsi le rôle d'un accumulateur de pression.

11. Dispositif selon la revendication 10, caractérisé en ce qu'il comprend en outre des moyens capteurs électriques (260) agencés pour émettre des signaux électriques indicatifs de la pression accumulée dans la chambre à volume variable (233b).

12. Dispositif selon la revendication 11, caractérisé en ce que les moyens capteurs électriques comprennent des moyens capteurs de position électriques (260) portés par le conteneur (233a) dans une position fixe pour fournir des signaux électriques indicatifs de la position de l'élément mobile (235) par rapport à la structure support (190, 191).

13. Dispositif selon la revendication 12, caractérisé en ce que les moyens capteurs de position électriques comprennent un micro-interrupteur (260, 260a).

14. Dispositif selon l'une quelconque des revendications 10 à 13, caractérisé en ce qu'un clapet anti-retour (234) est intercalé entre le refoulement (232b) de la pompe (232) et la chambre à volume variable (233b) pour empêcher le fluide de s'écouler de la chambre (233b) à la pompe (232).

15. Dispositif selon la revendication 14, caractérisé en ce que l'élément mobile (235) est en forme de godet et est disposé à l'intérieur du conteneur (233a) autour de la structure support (190, 191) et est monté pour coulisser axialement à joint étanche sur la structure support.

16. Dispositif selon la revendication 15, caractérisé en ce que l'élément mobile en forme de godet (235) possède un bord (235a) rabattu au moins partiellement vers l'extérieur et en ce que les moyens élastiques comprennent un ressort hélicoïdal (236) disposé dans le conteneur (233a) et qui porte, à une extrémité, contre le fond du conteneur, et à l'autre extrémité, contre la partie ou les parties rabattue(s) vers l'extérieur du bord de l'élément mobile en forme de godet (235).

17. Dispositif selon l'une ou plusieurs des revendications 10 à 16, particulièrement destiné à commander un actionneur hydraulique (6), caractérisé en ce qu'il comprend en outre un dispositif hydraulique (250, 241) à commande hydraulique proportionnelle fixé à la structure support (190) et comprenant un servo-distributeur modulateur (241) relié à la chambre à volume variable (233b) et pouvant être relié au dispositif actionneur (6) et une valve pilote (250) à commande électrique proportionnelle destinée à moduler la pression intérieure de la chambre pilote (252) du servo-distributeur (241) et, par conséquent, à moduler le débit de fluide hydraulique sortant de la chambre à volume variable (233b) et le dispositif actionneur (6).

18. Dispositif selon la revendication 17, caractérisé en ce qu'il comprend en outre une soupape à clapet normalement fermée (273—277) fixée à la structure support (190) et interposée entre la chambre à volume variable (233b) et le servo-distributeur (241) et destinée à s'ouvrir chaque fois que la valve pilote (250) fournit de la pression dans la chambre pilote (252).

19. Dispositif selon la revendication 18, dans lequel le servo-distributeur (241) comprend un corps de distributeur (241a) et un tiroir (243) qui se déplace dans ce corps en fonction de la pression régnant dans la chambre pilote (252), caractérisé en ce que la soupape à clapet (273—277) est formée et intégrée dans le corps (241a) du servo-distributeur (241) et comprend un clapet (274) qui peut se déplacer sous l'action de moyens de sollicitation élastiques (275) sous l'effet d'un mouvement du tiroir mobile (243) du servo-distributeur (241).

FIG. 1

0 136 267

FIG. 2

FIG. 3

# FIG. 4

# FIG. 7

# FIG. 9